# EUROPEAN PATENT SPECIFICATION

(11) **EP 4 188 752 B1**
(45) Date of publication and mention of the grant of the patent: **09.10.2024**
(21) Application number: 20737385.3
(22) Date of filing: 30.06.2020
(51) Int. Cl.: B60R 16/027

(54) **CLOCKSPRING WITH ROLLING CONTACTS**
UHRFEDER MIT ROLLKONTAKTEN
RESSORT D'HORLOGERIE À CONTACTS DE ROULEMENT

(43) Date of publication of application: 07.06.2023
(73) Proprietor: MERIT AUTOMOTIVE ELECTRONICS SYSTEMS S.L.U, 08620 - Barcelona (ES)
(72) Inventor: MODLINSKI, Boguslaw, 57-200 Zabkowice Slaskie (PL); ZIOLO, Tomasz, 28-500 Kazimierza Wielka (PL)
(74) Representative: Lukaszyk, Szymon
(86) International application number: PCT/EP2020/068357
(87) International publication number: WO 2022/002360

(56) References cited:
- EP-A1- 0 746 065
- EP-A2- 0 363 141
- WO-A1-2018/008375
- US-A- 5 429 508
- US-A- 5 775 920
- US-B1- 6 299 454

## Description

The present invention relates to a clockspring, apt in particular for establishing electrical connection between the steering wheel and the steering column of an automotive vehicle, comprising a stator housing and a rotor housing rotatably associated with the stator housing about an axis and defining radial space between the stator housing and the rotor housing.

### Background of the Invention

Clocksprings generally consist of a flat multicore cable wound in a spiral shape similar to a clock spring, hence the name. But the name is also given to devices fulfilling the same purpose but which use spring-loaded brushes, contacting concentric slip rings, etc. In the automotive industry they are employed to establish an electrical connection between the steering wheel airbag with its triggering system, steering wheel buttons with a car audio system, etc.

Patent publication US5429508 discloses an automobile steering column interconnector having a hub rotatably associated with a housing to define a radial space. The hub comprises at least one annular recess associated with an inner face of the hub containing a first electrically conductive ring associated with a first connector, while the housing comprises at least one annular access located on the inner face of the housing complementary to the at least one hub annular recess, and the at least one housing annular recess includes a second electrically conductive ring associated with a second connector to complete the electrical pathway.

Patent publication US5775920 discloses a rolling elastomer contact clockspring having a rotor rotatably associated with a stator to define a radial space including one or more complementary first and second electrically conductive tracks in a form of annular recesses, which are united with one or more elastomer rolling contacts capable of rotation in these recesses between the rotor and the stator due to relative rotation between said first and second tracks, in order to complete the electrical pathway.

The points of electrical contact between electrically conductive tracks and the rolling contacts are prone to wear, oxidation and contaminations. Thus there is a risk that electrical contact between the conductive tracks may eventually be lost after a prolonged use.

Another problem lies in the assembly of such clocksprings, as all the rolling contacts must be first positioned in the annular recesses of one part and then all at once placed in the corresponding recesses of the other part.

Therefore it has been the object of the present invention to provide a clockspring that would be devoid of the aforementioned drawbacks, would be compact, cost efficient and simple to manufacture and assembly.

### Summary of the invention

The invention provides a clockspring, of the kind mentioned in the outset, comprising a stator housing and a rotor housing rotatably associated with the stator housing about an axis and defining radial space between these the stator housing and the rotor housing, characterised in that it further comprises at least one stator plate associated with the stator housing; at least one rotor plate associated with the rotor housing; plurality of electrically conductive tracks disposed annularly over at least one surface of said stator plate; plurality of electrically conductive tracks disposed annularly over at least one surface of said at least one rotor plate and substantially corresponding to said electrically conductive tracks of said stator plate; at least one intermediary member disposed between each stator plate and each rotor plate, and capable of rotation about said axis with respect to the adjacent stator plate and the adjacent rotor plate; plurality of rolling contacts disposed on said at least one intermediary member, substantially corresponding to said electrically conductive tracks of said at least one stator plate and said electrically conductive tracks of said at least one rotor plate, and capable of rotation between said at least one stator plate and said at least one rotor plate, due to relative rotation between said at least one stator plate and said at least one rotor plate, in order to complete electrical pathways between said electrically conductive tracks, wherein axes of rotations of said rolling contacts are slanted about certain non-zero angle with regard to the radial direction defined by said axis in order to produce a wiping action in addition to their rolling action, so as to clean said electrically conductive tracks.

This type of construction creates additional kinetic friction at the joint of the elements, thus enabling the contact surface to be protected against dust, dirt, etc. Furthermore the conductive tracks are flat which further facilitates dust removal sideways. This also facilitates the assembly of the clockspring. First the rolling contacts are rotatably disposed within the intermediary member, then the intermediary member is rotatably disposed between the stator plate and the rotor plate.

Preferably the stator housing comprises at least one radially internal sleeve and the rotor housing comprises at least one radially external sleeve, wherein the clockspring comprises a bearing assembly comprising at least three rollers disposed rotatably and preferably equiangularly between said at least one radially internal sleeve and said at least one radially external sleeve.

Preferably the circumferential gap between said sleeves has a width smaller than the diameter of said rollers.

This forces the rollers to flex ensuring clearance of tolerances. Furthermore it can be used to create a resilient, high current, electrical connection between the sleeves.

Preferably said rollers are rotatably supported by an annular guide providing their bearing and guidance.

Preferably the axial distance between said at least one stator plate and said at least one rotor plate is smaller than the diameter of said rolling contacts.

This likewise forces the rolling contacts to flex, ensuring clearance of tolerances.

Preferably said at least one stator plate is the part of the stator housing, and/or said at least one rotor plate is the part of the rotor housing.

Preferably said intermediary member has a number of, preferably equiangularly disposed, guiding members providing bearing and guidance for said rolling contacts.

Preferably said intermediary member is provided with seats embracing said rolling contacts over the part of their periphery.

Preferably said rolling contacts have a form of rings or disks.

### Brief description of drawings

The invention shall be described and explained below in connection with the attached drawings in which:
Fig. 1 is a schematic top view of an embodiment of a clockspring according to the present invention;
Fig. 2 is a schematic side view of the inside of the clockspring shown in Fig. 1;
Fig. 3 is a schematic cross-sectional view of the clockspring along the plane P-P of Fig. 2;
Fig. 4 is an axonometric view of a part of the clockspring shown in Fig. 1;
Fig. 5 is an axonometric view of the clockspring shown in Fig. 1;
Fig. 6 illustrates another embodiment of the clockspring in side view;
Fig. 7 illustrates yet another embodiment of the clockspring according to the present invention in top view, along with two enlarged details; and
Fig. 8 illustrates a bearing assembly of the clockspring shown in Fig. 7.

### Detailed description of preferred embodiment

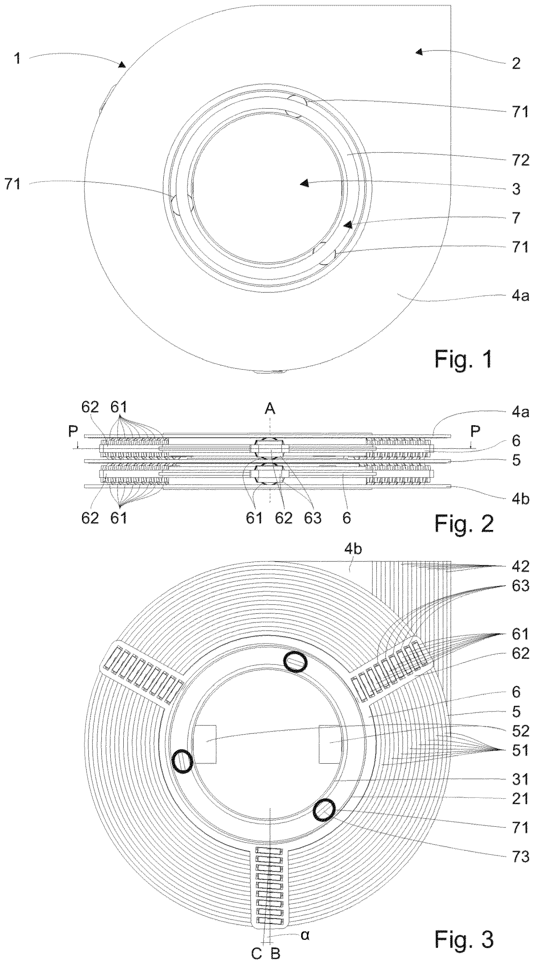

An embodiment of the clockspring 1 of the present invention shown in Figs. 1-4 comprises a stator housing 2 and a rotor housing 3 rotatably associated with a stator housing 2 about an axis A by means of a bearing assembly 7, and forming a compact, preassembled module. The stator housing 2 can be fixed to a steering column of an automotive vehicle, while the rotor housing 3 can be fixed to a steering wheel in a manner well known to those skilled in the art in order to establish an electrical connection between the steering wheel airbag with its triggering system, steering wheel buttons with a car audio system, etc.

A radial space is defined between the stator housing 2 and the rotor housing 3. In this embodiment the clockspring 1 comprises two stator plates 4 and one rotor plate 5 substantially parallel to each other in planes perpendicular to the axis A, wherein the rotor plate 5 is disposed between the stator plates 4. In this embodiment the top stator plate 4a and the bottom stator plate 4b form a part of the stator housing 2. In other embodiments stator plates 4 could be fixed to the housing in any known manner.

The bottom stator plate 4b is provided with nine electrically conductive tracks 41 disposed annularly over its top surface which correspond to nine electrically conductive tracks 51 disposed annularly over the bottom surface of the rotor plate 5. Similarly the top stator plate 4a is provided with nine electrically conductive tracks 41 disposed annularly over its bottom surface which correspond to nine electrically conductive tracks 51 disposed annularly over the top surface of the rotor plate 5. In other embodiments the numbers of tracks 41 and 51 could obviously be different, as long as the tracks 41 and 51 on the facing each other surfaces of the stator plate 4 and the rotor plate 5 correspond to each other.

Two intermediary nonconductive members 6, which in this embodiment are made of plastic in an injection moulding process, are disposed rotatably about an axis A between the stator plates 4 and the rotor plate 5. To this end, in this embodiment, the stator housing 2 is provided with two internal sleeves 21. The top internal sleeve 21a is fixed at the top with the top stator plate 4a, while the bottom internal sleeve 21b is fixed at the bottom with the bottom stator plate 4b, so that the rotor plate 5 can rotate in an annular gap between the sleeves 21. The radially distal annular surfaces of the sleeves 21 provide bearing for the intermediary members 6, wherein lubricant is disposed between the sleeves 21 and the intermediary members 6 to minimize friction.

Rolling contacts 61 are disposed on the intermediary members 6, wherein each rolling contact 61 tangentially abuts a pair of annular tracks 41 and 51 on the facing each other surfaces of the stator plate 4 and the rotor plate 5. The rolling contacts 61 are capable of rotation between the stator plate 4 and the rotor plate 5 due to their relative rotation and complete electrical pathways between the electrically conductive tracks 41, 51. In this embodiment the rolling contacts 61 have a form of hollow metal rings and the intermediary member 6 comprises seats 63 separating the rings 61 from each other. Each seat 63 embraces the ring 61 over the part of their periphery thus providing it only one rotational degree of freedom, wherein electrically conductive lubricant is disposed in the seats 63 to minimize friction between the rolling contacts 61 and the seats 63. Axial distances between the stator plates 4 and the rotor plate 5 in between them are chosen to be smaller than the outer diameters of the rings 61. This causes elastic deflection of the rings 61 and ensures constant elastic pressure and contact as well as compensation of possible dimensional differences. As a result of friction and the resulting moment, the rings 61 can rotate in the seats 63 of the intermediary member 6, which protect them against falling over and isolate each ring from each other. In this embodiment each intermediary member 6 comprises three equiangularly disposed guiding members 62, each providing bearing and guidance for nine rings 61.

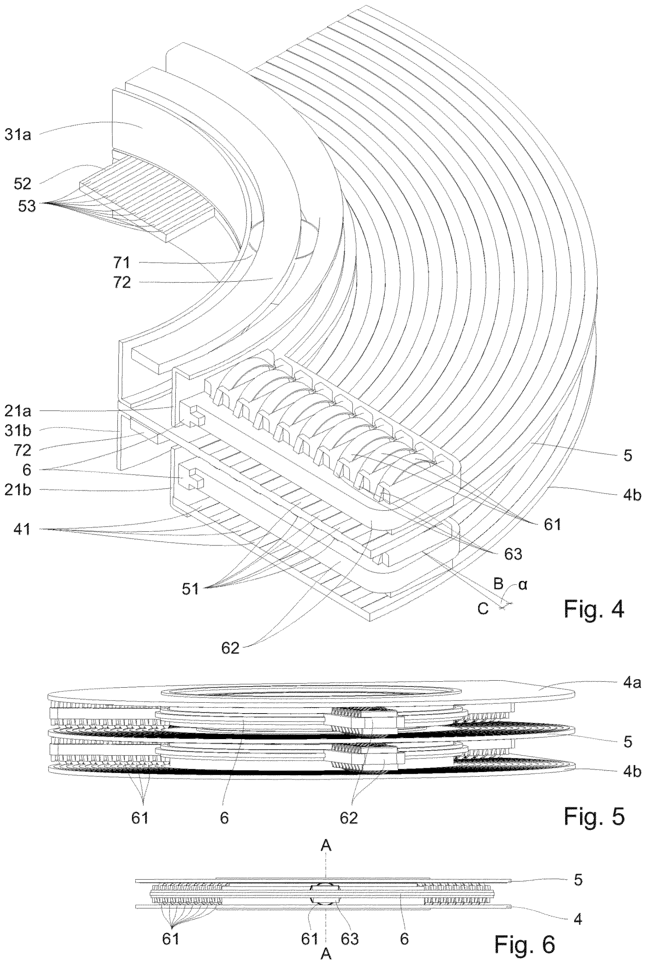

As shown in Figs. 3 and 4 the configuration of the seats 63 provides that the axes C of rotations of the rings 61 are slanted about an angle α with regard to the radial direction B defined by the clockspring axis A. Such a construction produces a wiping action in addition to the rolling action of the rings 61, so that electrically conductive tracks 41, 51 are cleaned, while the rings 61 roll over the conductive tracks 41, 51. In this embodiment α amounts about 5 degrees. But in other embodiments this particular value should be individually selected in dependence on the coefficient of friction between the seats 63 and the rolling contacts 61, as well as between the annular tracks 41 and 51 and the rolling contacts 61.

As shown in Figs. 3 and 4 the rotor plate 5 is provided with two radial protrusions 52 on which nine interface tracks 53 are printed, each corresponding to and connected with a separate annular track 51. Nine interface tracks 42, each corresponding to and connected with a separate annular track 41 are printed also on the stator plates 4. Each pair of tracks 42, 53 can be used to establish distinct electrical connection between a rotating device or a control unit and a stationary device or a control unit.

In this embodiment the rotor housing 3 comprises two annular external sleeves 31 fixed to the rotor plate 5 and a bearing assembly 7 comprises six rollers 71 disposed rotatably between the sleeves 21 and 31, wherein three rollers are disposed equiangularly between the top internal sleeve 21a and the top external sleeve 31a and three rollers are disposed equiangularly between the bottom internal sleeve 21b and the bottom external sleeve 31b. The diameters of the sleeves 21 and 31 are chosen so that their mutual concentric position creates a circumferential gap with a width smaller than the diameter of the roller 71 disposed in this gap. This forces the roller 71 to flex and creates a resilient electrical connection between the sleeves 21 and 31. The roller 71 works in the range of elastic deflection ensuring clearance of tolerances and a stable electrical connection. Rotation of the rotor housing 3 w/r/t the stator housing 2 induces, as a result of friction, rotation of the rollers 71. Two annular roller guides 72 are disposed above the rollers 71. Each of the guides 72 has three axial guiding projections 73 defining the axes of rotations for the rollers 71 and providing their bearing and guidance.

Fig. 6 illustrates another embodiment of the clockspring 1a comprising just one stator plates 3 and just one rotor plate 4, wherein the intermediary member 6 has a form of a disk. Although the rolling contacts 61 are still aligned with regard to the radial direction defined by the axis A of the clockspring rotation, it should be understood that each rolling contact 61 may have a different angular position on the intermediary member 6.

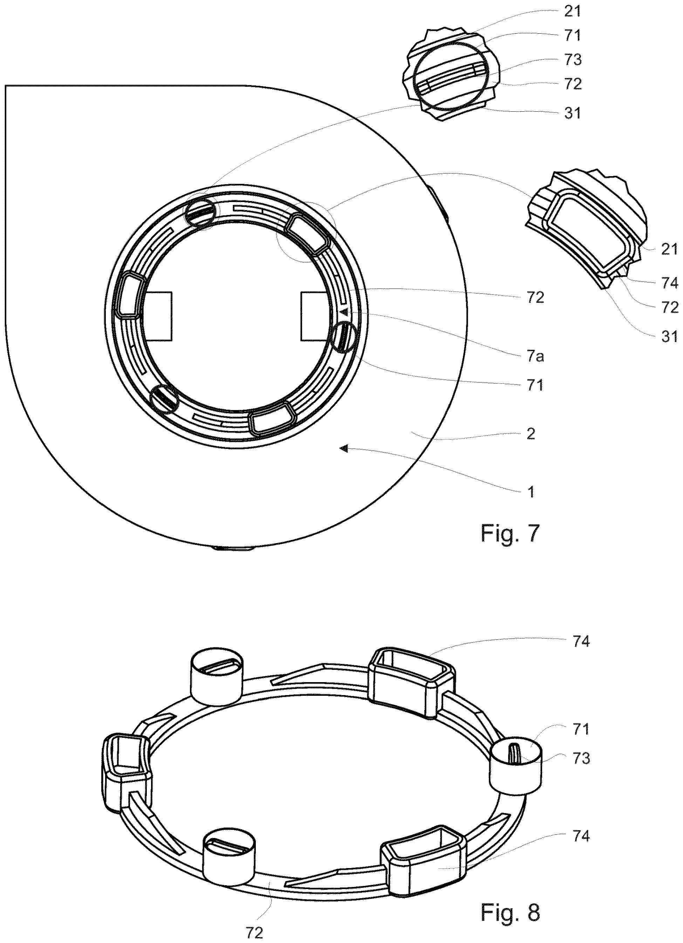

Another embodiment of the bearing assembly 7a is shown in Figs 7 and 8. As shown in Fig. 8 three rollers 71 are pushed on guiding projections 73 shaped on a roller guide 72, made of plastic in an injection moulding process, forming a stable preassembled unit. Upon insertion of this unit between the sleeve 21 of the stator housing and the sleeve 31 of the rotor housing 3 rollers flex and are capable of rotation around the guiding projections 73. Furthermore the roller guide 72 comprises three sliding projections 74 that provide guidance for the roller guide 72 and protection against excessive flexion of the rollers 71.

In the presented embodiments the rolling contacts 61 have a form of a hollow metal rings. It shall be obvious however to those skilled in the art that they can be made e.g. from elastomeric material and have metallic flakes impregnated therein, can have the form of discs, etc.

The above embodiments of the present invention are therefore merely exemplary.

The figures are not necessarily to scale and some features may be exaggerated or minimized. The intended scope of the invention is indicated in appended claims.

### List of reference numerals

- 1.: clockspring
- 2.: stator housing

- 21.: internal sleeve

- 3.: rotor housing
- 31.: external sleeve

- 4.: stator plate

- 41.: electrically conductive annular track
- 42.: interface track

- 5.: rotor plate

- 51.: electrically conductive annular track
- 52.: radial protrusion
- 53.: interface track

- 6.: intermediary member

- 61.: electrically conductive ring
- 62.: guiding member
- 63.: ring seat

- 7.: bearing assembly

- 71.: roller
- 72.: roller guide
- 73.: guiding projection
- 74.: sliding projection

## Claims

1. A clockspring (1), apt in particular for establishing electrical connection between the steering wheel and the steering column of an automotive vehicle, comprising a stator housing (2) and a rotor housing (3) rotatably associated with the stator housing (2) about an axis (A) and defining radial space between the stator housing (2) and the rotor housing (3);
whereby it further comprises
at least one stator plate (4) associated with the stator housing (2);
at least one rotor plate (5) associated with the rotor housing (3);
plurality of electrically conductive tracks (41) disposed annularly over at least one surface of said stator plate (4);
plurality of electrically conductive tracks (51) disposed annularly over at least one surface of said at least one rotor plate (5) and substantially corresponding to said electrically conductive tracks (41) of said stator plate (4); at least one intermediary member (6) disposed between each stator plate (4) and each rotor plate (5), and capable of rotation about said axis (A) with respect to the adjacent stator plate (4) and the adjacent rotor plate (5);
plurality of rolling contacts (61) disposed on said at least one intermediary member (6), substantially corresponding to said electrically conductive tracks (41) of said at least one stator plate (4) and said electrically conductive tracks (51) of said at least one rotor plate (5), and capable of rotation between said at least one stator plate (4) and said at least one rotor plate (5), due to relative rotation between said at least one stator plate (4) and said at least one rotor plate (5), in order to complete electrical pathways between said electrically conductive tracks (41, 51),
**characterised in that** the axes (C) of rotations of said rolling contacts (61) are slanted about certain non-zero angle (α) with regard to the radial direction (B) defined by said axis (A) in order to produce a wiping action in addition to their rolling action, so as to clean said electrically conductive tracks (41, 51).

2. The clockspring (1) according to Claim 1, **characterized in that**, the stator housing (2) comprises at least one radially internal sleeve (21) and the rotor housing (3) comprises at least one radially external sleeve (31), wherein the clockspring (1) comprises a bearing assembly (7) comprising at least three rollers (71) disposed rotatably and preferably equiangularly between said at least one radially internal sleeve (21) and said at least one radially external sleeve (31).

3. The clockspring (1) according to Claim 1 or 2, **characterized in that** the circumferential gap between said sleeves (21; 31) has a width smaller than the diameter of said rollers (71).

4. The clockspring (1) according to Claim 1 or 2 or 3, **characterized in that**, said rollers (71) are rotatably supported by an annular guide (72) providing their bearing and guidance.

5. The clockspring (1) according to any one of preceding Claims, **characterized in that**, the axial distance between said at least one stator plate (4) and said at least one rotor plate (5) is smaller than the diameter of said rolling contacts (61).

6. The clockspring (1) according to any one of preceding Claims, **characterized in that**, said at least one stator plate (4) is the part of the stator housing (2).

7. The clockspring (1) according to any one of preceding Claims, **characterized in that**, said at least one rotor plate (5) is the part of the rotor housing (3).

8. The clockspring (1) according to any one of preceding Claims, **characterized in that** said intermediary member (6) has a number of, preferably equiangularly disposed, guiding members (62) providing bearing and guidance for said rolling contacts (61).

9. The clockspring (1) according to any one of preceding Claims, **characterized in that** said intermediary member (6) is provided with seats (63) embracing said rolling contacts (61) over the part of their periphery.

10. The clockspring (1) according to any one of preceding Claims, **characterized in that**, said rolling contacts (61) have a form of rings.

11. The clockspring (1) according to any one of preceding Claims, **characterized in that**, said rolling contacts (61) have a form of disks.

## Patentansprüche

1. Eine Uhrfeder (1), die insbesondere zur Herstellung einer elektrischen Verbindung zwischen dem Lenkrad und der Lenksäule eines Kraftfahrzeugs geeignet ist, mit einem Statorgehäuse (2) und einem Rotorgehäuse (3), das dem Statorgehäuse (2) um eine Achse (A) drehbar zugeordnet ist und einen radialen Raum zwischen dem Statorgehäuse (2) und dem Rotorgehäuse (3) definiert;
wobei sie ferner Folgendes umfasst
mindestens eine Statorplatte (4), die mit dem Statorgehäuse (2) verbunden ist; mindestens eine Rotorplatte (5), die mit dem Rotorgehäuse (3) verbunden ist; eine Vielzahl von elektrisch leitenden Bahnen (41), die ringförmig über mindestens eine Oberfläche der Statorplatte (4) angeordnet sind;
eine Vielzahl von elektrisch leitenden Bahnen (51), die ringförmig über mindestens eine Oberfläche der mindestens einen Rotorplatte (5) angeordnet sind und im Wesentlichen den elektrisch leitenden Bahnen (41) der Statorplatte (4) entsprechen; mindestens ein Zwischenelement (6), das zwischen jeder Statorplatte (4) und jeder Rotorplatte (5) angeordnet ist und sich um die Achse (A) in Bezug auf die benachbarte Statorplatte (4) und die benachbarte Rotorplatte (5) drehen kann;
eine Vielzahl von Rollkontakten (61), die auf dem mindestens einen Zwischenelement (6) angeordnet sind und im Wesentlichen den elektrisch leitenden Bahnen (41) der mindestens einen Statorplatte (4) und den elektrisch leitenden Bahnen (51) der mindestens einen Rotorplatte (5) entsprechen, und in der Lage ist, sich zwischen der mindestens einen Statorplatte (4) und der mindestens einen Rotorplatte (5) aufgrund einer relativen Drehung zwischen der mindestens einen Statorplatte (4) und der mindestens einen Rotorplatte (5) zu drehen, um elektrische Pfade zwischen den elektrisch leitenden Bahnen (41, 51) zu vervollständigen,
**dadurch gekennzeichnet, dass** die Drehachsen (C) der Rollkontakte (61) um einen bestimmten Winkel (α) ungleich Null in Bezug auf die durch die Achse (A) definierte radiale Richtung (B) geneigt sind, um zusätzlich zu ihrer Rollwirkung eine Wischwirkung zu erzeugen, um die elektrisch leitenden Bahnen (41, 51) zu reinigen.

2. Die Uhrfeder (1) nach Anspruch 1, **dadurch gekennzeichnet, dass** das Statorgehäuse (2) mindestens eine radial innere Hülse (21) und das Rotorgehäuse (3) mindestens eine radial äußere Hülse (31) aufweist, wobei die Uhrfeder (1) eine Lageranordnung (7) mit mindestens drei Rollen (71) aufweist, die drehbar und vorzugsweise gleichwinklig zwischen der mindestens einen radial inneren Hülse (21) und der mindestens einen radial äußeren Hülse (31) angeordnet sind.

3. Die Uhrfeder (1) nach Anspruch 1 oder 2, **dadurch gekennzeichnet, dass** der Umfangsspalt zwischen den Hülsen (21; 31) eine Breite aufweist, die kleiner als der Durchmesser der Rollen (71) ist.

4. Die Uhrfeder (1) nach Anspruch 1 oder 2 oder 3, **dadurch gekennzeichnet, dass** die Rollen (71) durch eine ringförmige Führung (72) drehbar gelagert sind, die ihre Lagerung und Führung gewährleistet.

5. Die Uhrfeder (1) nach einem der vorhergehenden Ansprüche, **dadurch gekennzeichnet, dass** der axiale Abstand zwischen der mindestens einen Statorplatte (4) und der mindestens einen Rotorplatte (5) kleiner ist als der Durchmesser der Rollkontakte (61).

6. Die Uhrfeder (1) nach einem der vorhergehenden Ansprüche, **dadurch gekennzeichnet, dass** die mindestens eine Statorplatte (4) ein Teil des Statorgehäuses (2) ist.

7. Die Uhrfeder (1) nach einem der vorhergehenden Ansprüche, **dadurch gekennzeichnet, dass** die mindestens eine Rotorplatte (5) ein Teil des Rotorgehäuses (3) ist.

8. Die Uhrfeder (1) nach einem der vorhergehenden Ansprüche, **dadurch gekennzeichnet, dass** das Zwischenelement (6) eine Anzahl von vorzugsweise gleichwinklig angeordneten Führungselementen (62) aufweist, die die Rollkontakte (61) tragen und führen.

9. Die Uhrfeder (1) nach einem der vorhergehenden Ansprüche, **dadurch gekennzeichnet, dass** das Zwischenelement (6) mit Sitzen (63) versehen ist, die die Rollkontakte (61) über den Teil ihres Umfangs umschließen.

10. Die Uhrfeder (1) nach einem der vorhergehenden Ansprüche, **dadurch gekennzeichnet, dass** die Rollkontakte (61) die Form von Ringen haben.

11. Die Uhrfeder (1) nach einem der vorhergehenden Ansprüche, **dadurch gekennzeichnet, dass** die Rollkontakte (61) die Form von Scheiben haben.

## Revendications

1. Un ressort d'horloge (1), apte en particulier à établir une connexion électrique entre le volant et la colonne de direction d'un véhicule automobile, comprenant un boîtier de stator (2) et un boîtier de rotor (3) associé de manière rotative au boîtier de stator (2) autour d'un axe (A) et définissant un espace radial entre le boîtier de stator (2) et le boîtier de rotor (3);
ce par quoi il comprend en outre
au moins une plaque de stator (4) associée au boîtier de stator (2);
au moins une plaque de rotor (5) associée au boîtier de rotor (3);
une pluralité de pistes électriquement conductrices (41) disposées de manière annulaire sur au moins une surface de ladite plaque de stator (4);
une pluralité de pistes électriquement conductrices (51) disposées de manière annulaire sur au moins une surface de ladite au moins une plaque de rotor (5) et correspondant sensiblement aux pistes électriquement conductrices (41) de ladite plaque de stator (4);
au moins un élément intermédiaire (6) disposé entre chaque plaque de stator (4) et chaque plaque de rotor (5), et capable de tourner autour dudit axe (A) par rapport à la plaque de stator adjacente (4) et à la plaque de rotor adjacente (5);
une pluralité de contacts roulants (61) disposés sur ledit au moins un élément intermédiaire (6), correspondant sensiblement à lesdites pistes électriquement conductrices (41) de ladite au moins une plaque de stator (4) et à lesdites pistes électriquement conductrices (51) de ladite au moins une plaque de rotor (5), et capables de tourner entre ladite au moins une plaque de stator (4) et ladite au moins une plaque de rotor (5), en raison de la rotation relative entre ladite au moins une plaque de stator (4) et ladite au moins une plaque de rotor (5), afin de compléter les chemins électriques entre lesdites pistes électriquement conductrices (41, 51),
**caractérisé en ce que** les axes (C) de rotations desdits contacts roulants (61) sont inclinés autour d'un certain angle non nul (α) par rapport à la direction radiale (B) définie par ledit axe (A) afin de produire une action d'essuyage en plus de leur action de roulement, de manière à nettoyer lesdites pistes électriquement conductrices (41, 51).

2. Le ressort d'horloge (1) selon la revendication 1, **caractérisé en ce que** le boîtier de stator (2) comprend au moins un manchon radialement interne (21) et le boîtier de rotor (3) comprend au moins un manchon radialement externe (31), dans lequel le ressort d'horloge (1) comprend un ensemble roulement (7) comprenant au moins trois rouleaux (71) disposés de manière rotative et de préférence équiangulaire entre ledit au moins un manchon radialement interne (21) et ledit au moins un manchon radialement externe (31).

3. Le ressort d'horloge (1) selon la revendication 1 ou 2, **caractérisé en ce que** l'espace circonférentiel entre lesdits manchons (21 ; 31) a une largeur inférieure au diamètre desdits rouleaux (71).

4. Le ressort d'horloge (1) selon la revendication 1 ou 2 ou 3, **caractérisé en ce que** lesdits rouleaux (71) sont supportés de manière rotative par un guide annulaire (72) assurant leur appui et leur guidage.

5. Le ressort d'horloge (1) selon l'une quelconque des revendications précédentes, **caractérisé en ce que** la distance axiale entre ladite au moins une plaque de stator (4) et ladite au moins une plaque de rotor (5) est inférieure au diamètre desdits contacts roulants (61).

6. Le ressort d'horloge (1) selon l'une quelconque des revendications précédentes, **caractérisé en ce que** ladite au moins une plaque de stator (4) fait partie du boîtier de stator (2).

7. Le ressort d'horloge (1) selon l'une quelconque des revendications précédentes, **caractérisé en ce que** ladite au moins une plaque de rotor (5) fait partie du boîtier de rotor (3).

8. Le ressort d'horloge (1) selon l'une quelconque des revendications précédentes, **caractérisé en ce que** ledit élément intermédiaire (6) comporte un certain nombre d'éléments de guidage (62), de préférence disposés de manière équiangulaire, qui assurent l'appui et le guidage desdits contacts roulants (61).

9. Le ressort d'horloge (1) selon l'une quelconque des revendications précédentes, **caractérisé en ce que** ledit élément intermédiaire (6) est pourvu de sièges (63) englobant lesdits contacts roulants (61) sur la partie de leur périphérie.

10. Le ressort d'horloge (1) selon l'une quelconque des revendications précédentes, **caractérisé en ce que** lesdits contacts roulants (61) ont une forme d'anneaux.

11. Le ressort d'horloge (1) selon l'une quelconque des revendications précédentes, **caractérisé en ce que** lesdits contacts roulants (61) ont une forme de disques.
